# EUROPÄISCHE PATENTSCHRIFT

(11) **EP 2 499 401 B1**
(45) Veröffentlichungstag und Bekanntmachung des Hinweises auf die Patenterteilung: **17.02.2016**
(21) Anmeldenummer: 10757730.6
(22) Anmeldetag: 14.09.2010
(51) Int. Cl.: F16H 61/421, F16H 61/431, F16H 61/47, F16H 61/456

(54) **KALIBRIERVERFAHREN UND HYDRAULISCHER FAHRANTRIEB**
CALIBRATION METHOD AND HYDRAULIC DRIVE SYSTEM
PROCÉDÉ D'ÉTALONNAGE ET SYSTÈME D'ENTRAÎNEMENT HYDRAULIQUE

(30) Priorität: 11.11.2009 DE 102009052687
(43) Veröffentlichungstag der Anmeldung: 19.09.2012
(73) Patentinhaber: Robert Bosch GmbH, 70469 Stuttgart (DE)
(72) Erfinder: BRAND, Michael, 89075 Ulm (DE); RÜCKERT, Reinhart, 89358 Kammeltal (DE); RENZ, Klaus, 89079 Ulm (DE); STUMM, Susanne, 55116 Mainz (DE)
(74) Vertreter: Thürer, Andreas
(86) Internationale Anmeldenummer: PCT/EP2010/005632
(87) Internationale Veröffentlichungsnummer: WO 2011/057688

(56) Entgegenhaltungen:
- EP-A2- 1 277 610
- EP-A2- 1 382 891
- US-A- 5 249 422
- US-A- 5 787 374
- US-A1- 2006 011 400

## Beschreibung

Die Erfindung betrifft ein Kalibrierverfahren für einen Fahrantrieb eines Fahrzeugs mit zwei hydraulischen Antriebskreisen und einen hydraulischen Fahrantrieb, der nach einem derartigen Kalibrierverfahren betreibbar ist.

Bei derartigen Zweikreisantrieben für Kettenfahrzeuge treibt beispielsweise ein Dieselmotor über ein Verteilergetriebe zwei elektrisch proportional verstellbare Axialkolbenpumpen an, die jeweils einen geschlossenen hydraulischen Kreislauf mit einem elektrisch verstellbaren Axialkolben-Hydromotor bilden. Jeder Hydromotor treibt über ein Turasgetriebe eine Kette des Fahrzeugs an. Die Drehzahl der beiden Hydromotoren wird mit einem Sensor gemessen. Ein Steuergerät steuert und regelt den Fahrantrieb mittels elektrisch proportionaler Ströme der Ansteuergeräte der Pumpen und/oder Motoren. Der prinzipielle Aufbau derartiger Zweikreisantriebe ist in den Druckschriften DE 10 2004 059 820 A1 und DE 37 39 389 A1 beschrieben.

US 5 787 374 A zeigt ein Kalibrierverfahren für einen Fahrantrieb eines Fahrzeugs mit zwei hydraulischen Antriebskreisen, die jeweils einen Hydromotor mit verstellbaren Schluckvolumen und eine Hydropumpe mit verstellbaren Fördervolumen aufweisen, denen jeweils ein Ansteuergerät zur Verstellung zugeordnet ist, das über ein Steuergerät elektrisch angesteuert wird, mit den Schritten: Erhöhen des Signalpegels bis ein Sollzustand erreicht ist; Einstellen des Signalpegels so, dass der Sollzustand über einen vorbestimmten Zeitraum im Zielfenster gehalten wird, speichern des so ermittelten Signalpegels und Wiederholen der oben genannten Schritte in entsprechender Weise für den anderen Antriebskreis.

J Problematisch bei diesen bekannten Lösungen ist, dass es aufgrund von Toleranzen des Stromabgleichs des Steuergerätes sowie der Ansteuergeräte der Hydromotoren und Pumpen sowie mechanischer Toleranzen des Antriebs, beispielsweise des Turasgetriebes, der Lagerung sowie der Kettenspannung beim Anfahren aufgrund eines unterschiedlichen Ansprechverhaltens der einzelnen Antriebskreise zu einem Winkelversatz zur gewünschten Fahrtrichtung kommt, die dann vom Fahrzeugführer korrigiert werden muss und bei ungünstigen Bedingungen auch eine Gefährdung darstellt. Demgegenüber liegt der Erfindung die Aufgabe zugrunde, ein Kalibrierverfahren für einen Fahrantrieb eines Fahrzeugs mit zwei hydraulischen Antriebskreisen und einen Fahrantrieb zu schaffen, der nach einem derartigen Kalibrierverfahren betreibbar ist. Diese Aufgabe wird im Hinblick auf das Kalibrierverfahren durch die Merkmalskombination des Patentanspruches 1 und im Hinblick auf den Fahrantrieb durch die Merkmalskombination des nebengeordneten Patentanspruches 9 gelöst.

Vorteilhafte Weiterbildungen der Erfindung sind Gegenstand der Unteransprüche.

Erfindungsgemäß ist das Kalibrierverfahren für Fahrantriebe mit zwei hydraulischen Antriebskreisen vorgesehen, die jeweils einen Hydromotor mit verstellbarem Schluckvolumen und/oder eine Hydropumpe mit verstellbarem Fördervolumen aufweisen. Die Verstellung des Hydromotors und/oder der Pumpe erfolgt jeweils über Ansteuergeräte herkömmlicher Bauart, über die beispielsweise der Schwenkwinkel der jeweiligen Hydromaschine verstellbar ist. Diese Ansteuergeräte werden mit einem hydraulischen oder elektrischen Steuersignal zur Verstellung der jeweils zugeordneten Hydromaschine beaufschlagt. Die Kalibrierung der beiden Antriebskreise zur Gewährleistung eines gleichmäßigen und gleichzeitigen Anfahrens des Fahrzeugs erfolgt dadurch, dass zunächst an eines der Ansteuergeräte eines Antriebskreises ein Steuersignal abgegeben wird, das unterhalb der Ansprechschwelle dieses Antriebsgerätes liegt. In einem folgenden Verfahrensschritt wird der Signalpegel dann in Grobstufen stufenweise erhöht bis ein vorbestimmter Sollzustand erreicht ist. Dieser Sollzustand kann beispielsweise einen Minimaldrehzahl sein, bei der sich eine Kette des Fahrantriebs in Bewegung setzt. Prinzipiell kann dieser Sollzustand jedoch auch eine Maximaldrehzahl oder ein zwischen den beiden Extremas (Minimaldrehzahl/Maximaldrehzahl) liegender Zustand sein. Bei Erreichen dieses Sollzustands wird der Signalpegel um einen Teil einer Grobstufe, beispielsweise um zwei Drittel einer Grobstufe verringert und anschließend der Signalpegel stufenweise um Feinstufen verändert bis der gewünschte Sollzustand in einem so genannten Zielfenster liegt - d.h. es wird nicht exakt ein Sollzustandswert angesteuert, sondern ein gewisser Toleranzbereich zugelassen.

Diese Feinstufeneinstellung wird so lange durchgeführt bis der Sollzustand über einen vorbestimmten Zeitraum in dem Zeitfenster gehalten werden kann. Nach dieser Stabilisierung des Sollzustands wird der ermittelte Signalpegel abgespeichert und das vorbeschriebene Kalibrierverfahren für die entsprechende Hydromaschine (Motor/Pumpe) des anderen Antriebszweigs durchgeführt.

Auf diese Weise können die eingangs beschriebenen Toleranzen des Stromabgleichs des Steuergerätes oder des Ansteuergerätes sowie die mechanischen Toleranzen des Fahrantriebs ausgeglichen werden, so dass ein gleichmäßiges Anfahren des Fahrzeugs ohne Winkelversatz gewährleistet ist.

Erfindungsgemäß wird es bevorzugt, wenn die Steuersignale elektrische Steuersignale sind. Die Erfindung lässt sich jedoch entsprechend auch bei hydraulischen Steuersignalen realisieren.

Beim erfindungsgemäßen Konzept kann der vorbeschriebene Sollzustand eine Minimal- oder eine Maximaldrehzahl des Hydromotors oder der Pumpe des jeweiligen hydrostatischen Getriebes eines Antriebszweigs sein. Dabei sind die sich bei der Kalibrierung ergebenden Signalpegel, bei denen der Sollzustand in einem vorbestimmten Zielfenster gehalten wird, diejenigen Steuersignale, die sich bei minimaler oder maximaler Drehzahl einstellen.

Die Ansteuergeräte für die Komponenten des hydrostatischen Getriebes (Motor, Pumpe) verfügen jeweils über einen Proportionalmagneten, über den das Förder- bzw. das Schluckvolumen verstellbar ist.

Bei einem bevorzugten Ausführungsbeispiel der Erfindung erfolgt die Kalibrierung sowohl bei Vorwärts- als auch bei Rückwärtsfahrt des Fahrantriebes.

Erfindungsgemäß ist es vorgesehen, dass das vorbeschriebene Kalibrierverfahren vor der Auslieferung des Fahrzeugs an einen Kunden werksseitig, vorzugsweise bei vom Boden abgehobenen Ketten durchgeführt wird.

Vorzugsweise wird dies Kalibrierung auch bei einer Wartung oder nach Ablauf eines vorgegebenen Kalibrierzeitraums durchgeführt.

Der erfindungsgemäße hydraulische Fahrantrieb ist mit einem Steuergerät ausgeführt, das zur Durchführung des vorbeschriebenen Verfahrens konfiguriert ist.

Bei dem Fahrzeug kann es sich beispielsweise um einen Dozer oder einen Crawler handeln.

Ein bevorzugtes Ausführungsbeispiel der Erfindung wird im Folgenden anhand schematischer Zeichnungen näher erläutert. Es zeigen:
Figur 1 eine Schemadarstellung eines erfindungsgemäßen hydraulischen Fahrantriebs und
Figur 2 ein Ablaufschema eines Kalibrierverfahrens für einen derartigen Fahrantrieb.

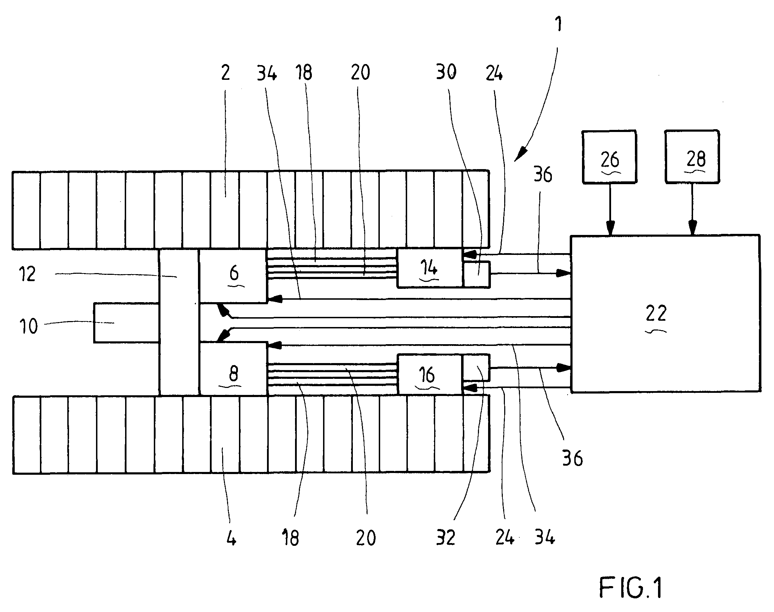

Figur 1 zeigt eine stark schematisierte Ansicht eines Fahrantriebs 1 eines Kettenfahrzeugs, beispielsweise eines Dozers. Ein derartiger Fahrantrieb ist als Zweikreisantrieb ausgelegt, wobei jeweils einer Kette 2, 4 ein hydraulischer Antriebskreis zugeordnet ist. Jeder dieser Antriebskreise enthält ein hydrostatisches Getriebe bestehend aus einer verstellbaren Pumpe 6, 8, die beide von einem Dieselmotor 10 und einem Verteilergetriebe 12 angetrieben werden. Die in Axialkolbenbauweise ausgeführten Hydropumpe 6, 8 jedes Antriebskreises ist in einem geschlossenen Kreislauf mit einem elektrisch verstellbaren Hydromotor 14, 16 angeordnet, wobei in der Darstellung gemäß Figur 1 die Hochdruck-/Niederdruckleitungen mit den Bezugszeichen 18 bzw. 20 gekennzeichnet sind. Beim beschriebenen Ausführungsbeispiel sind sowohl die Hydropumpen 6, 8 als auch die Hydromotoren 14, 16 in Axialkolbenbauweise ausgeführt, deren Förder-/Schluckvolumen elektrisch verstellbar ist. Die Hydromotoren 14, 16 sind jeweils über ein Turasgetriebe (nicht dargestellt) mit der jeweiligen Kette 2, 4 verbunden.

Die elektrische Verstellung der Hydromaschinen 6,8 und 14, 16 erfolgt beim dargestellten Ausführungsbeispiel über nicht näher dargestellte Ansteuergeräte, über die der Schwenkwinkel der jeweiligen Axialkolbenmaschine einstellbar ist.

Der Grundaufbau derartiger Stellsysteme zur Einstellung des Förder-/Schluckvolumenstroms einer Hydromaschine sind bekannt, beispielhaft sei auf das Datenblatt RD 30024 der Bosch Rexroth AG verwiesen. Bei diesen Stellsystemen/Ansteuergeräten erfolgt die Verstellung des Schwenkwinkels über ein proportional verstellbares Wegeventil, das mittels eines Proportionalmagneten verstellbar ist. Die Ansteuerung dieser Proportionalmagneten erfolgt bei dem in Figur 1 dargestellten Ausführungsbeispiel über ein Steuergerät 22, das mit einer Vielzahl von Ausgängen ausgeführt ist, über die durch Ansteuerung der vorbeschriebenen Ansteuergeräte der Axialkolbenmaschinen die Hydropumpen 6, 8 und die Hydromaschinen 14, 16 sowohl in Vorwärtsfahrtrichtung als auch in Rückwärtsfahrtrichtung ansteuerbar sind. Die Signalübertragungswege zur Ansteuerung der Ansteuergeräte sind in Figur 1 mit den Signalleitungen 24, 34 angedeutet, die vom jeweiligen Ausgang des Steuergerätes 22 (vorzugsweise ein PWM-Ausgang) zum jeweiligen Ansteuergerät der Hydromaschinen 6, 8, 14, 16 verlaufen.

Die Sollwerteinstellung am Steuergerät 22 erfolgt beispielsweise über Pedale 26 oder einen Joystick 28. Die Drehzahl der Hydromotoren 14, 16 und damit die Bewegungsgeschwindigkeit der Ketten 2, 4 kann über Drehzahlsensoren 30, 32 erfasst werden, deren Ausgangssignal über Signalleitungen 36 zum Steuergerät 22 gemeldet werden.

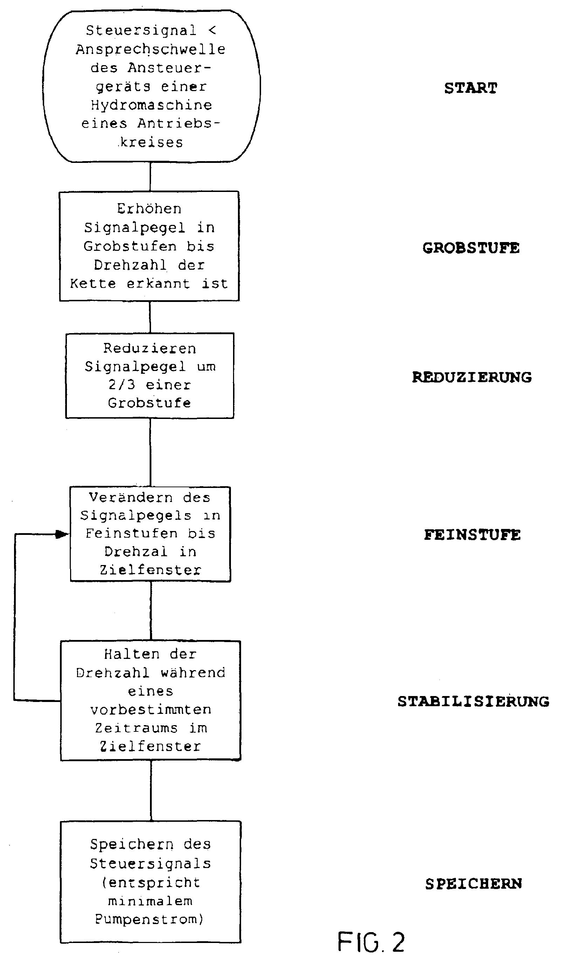

Wie eingangs erläutert, ist es für eine exakte Steuerung des Dozers erforderlich, dass insbesondere beim Anfahren beide Ketten 2, 4 gleichzeitig und mit der gleichen Drehzahl ansteuerbar sind. Um dies zu gewährleisten, wird werksseitig und kann bei einer Wartung sowie innerhalb vorbestimmter Wartungszyklen eine Kalibrierung durchgeführt werden, die anhand Figur 2 erläutert wird. Figur 2 zeigt ein Ablaufschema mit den wesentlichen Kalibrierschritten. Dabei wird die Kalibrierung der Pumpen 6, 8 im Hinblick auf einen minimalen Pumpenförderstrom erläutert, der erforderlich ist, um die Ketten 2, 4 in Bewegung zu setzen. In entsprechender Weise können selbstverständlich auch die Hydromaschinen 14, 16 im Hinblick auf das minimale Schluckvolumen kalibriert werden. Erfindungsgemäß wird es bevorzugt, wenn diese Kalibrierung auch auf das maximale Förder-/Schluckvolumen ausgerichtet wird, so dass ein Synchronlauf bei Höchstgeschwindigkeit gewährleistet ist.

Zur "Start" der Kalibrierung des genannten Minimalfördervolumens der Hydropumpen 6, 8 wird das über die Steuerleitung 34 an das Ansteuergerät der Hydropumpe eines Antriebskreises, beispielsweise der Hydropumpe 8 angelegte Steuersignal auf einen so geringen Wert eingestellt, dass das Ansteuergerät oder genauer gesagt, der Proportionalmagnet der Stelleinrichtung zur Verstellung des Schwenkwinkels der Axialkolbenpumpe 8 gerade nicht anspricht.

In einem mit "Grobstufen" genannten Kalibrierschritt wird dieses Steuersignal, d.h. der an den Proportionalmagneten angelegte Strom in Grobstufen erhöht bis über den Drehzahlsensor 32 eine Drehzahl der Kette 4 erkannt wird, d.h. bis sich die Kette 4 in Bewegung setzt.

Bei einer 12V-Spannungsversorgung liegen die an den Proportionalmagneten angelegten Ströme beispielsweise im Bereich von 400 mA, während sie bei maximaler Drehzahl im Bereich von 1200 mA liegen.

Nachdem sich die Kette 4 in Bewegung gesetzt hat, wird in dem Schritt "Reduzierung" gemäß Figur 2 das Steuersignal um einen vorbestimmten Anteil einer Grobstufe, im vorliegenden Fall um 2/3 verringert.

Darauf folgend wird im dem Kalibrierschritt "Feinstufe" das Steuersignal in Feinstufen so lange geändert bis die über den Drehzahlsensor 32 erfasste Kettendrehzahl oder die Drehzahl des Hydromotors 16 innerhalb eines Zielfensters liegt. Dieses Zielfenster wird bei der Erfassung des minimalen Pumpenstroms 8 ein relativ geringer Drehzahlbereich sein.

Diese Aufteilung der Kalibrierung in eine Grob- und eine Feinstufe führt zu einer beträchtlichen Zeiteinsparung, da durch die vergleichsweise großen Sprünge in dem Kalibrierschritt "Grobstufe" sehr schnell der kritische Drehzahlbereich erreicht wird und dann die Feineinstellung im Bereich des Zielfensters in der "Feinstufe" über die wesentlich kleineren Steuersignalstufen erfolgt.

Im Schritt "Stabilisierung" erfolgt dann über den Feinstufenmodus die Ansteuerung derart, dass die Kettendrehzahl über einen vorbestimmten Zeitraum innerhalb des Zielfensters gehalten wird und somit ohne Veränderung des Steuersignals konstant bleibt. Während der "Stabilisierung" muss sich die Kettendrehzahl für einen bestimmten Zeitraum stabil im Zielfenster befinden. Wird während dieses Zeitraums das Zielfenster verlassen, so wird zum Kalibrierschritt "Feinstufe" zurück gegangen und so lange eingeregelt bis die Stabilisierung eingetreten ist. Dabei besteht vorzugsweise keine Zeitbegrenzung von Seiten des Steuergerätes 22. Der Kalibriervorgang kann jedoch durch Betätigung des Pedals 26 oder des Joysticks 28 manuell abgebrochen werden.

Sobald dieser stabile Zustand erreicht wird, wird das entsprechende Steuersignal, das für einen minimalen Pumpenvolumenstrom oder eine minimale Bestromung des Ansteuergerätes steht, in einem Datenspeicher des Steuergerätes 22 abgelegt ("Speichern").

Diese Kalibrierung wird sowohl für die Vorwärtsfahrt als auch für die Rückwärtsfahrt beider Antriebskreise durchgeführt.

Bei besonders hohen Anforderungen kann eine entsprechende Kalibrierung auch für die Hydromotoren 14, 16 sowohl in Vorwärts- als auch in Rückwärtsfahrt durchgeführt werden. Diese Kalibrierung erfolgt in entsprechender Weise.

Diese Kalibrierung erfolgt ohne manuellen Eingriff über das Steuergerät 22 als Autokalibrierung.

Nach der Kalibrierung liegen die minimalen Pumpenstromwerte sowohl für die Vorwärts- als auch für die Rückwärtsfahrt vor. Gegebenenfalls liegen auch die minimalen Motorstromwerte für die beiden Fahrzustände vor. Diese Daten sind dann im Steuergerät 22 abgelegt.

Des Weiteren ist es möglich, eine Kalibrierung auch im Hinblick auf die Maximaldrehzahl der Ketten 2, 4, d.h auf die maximale Fahrgeschwindigkeit auszurichten. In diesem Fall wird im Kalibrierschritt "Grobstufe" das Steuersignal, d.h. der an den Proportionalmagneten angelegte Strom, so lange erhöht bis über den zugeordneten Drehzahlsensor 32, 30 keine Drehzahländerung mehr festgestellt wird - die Maximalgeschwindigkeit der jeweiligen Kette 2, 4 ist erreicht. Die Kalibrierung erfolgt dann im Folgenden gemäß dem in Figur 2 dargestellten Ablaufschema durch die Schritte "Reduzierung", "Feinstufe" und "Stabilisierung". Die dabei erhaltenen maximalen Pumpen-/Motorströme werden ebenfalls im Datenspeicher des Steuergerätes 22 abgelegt. Durch diese Kalibrierung ist somit eine Geradeausfahrt sowohl beim Anfahren als auch bei der Maximalgeschwindigkeit und den dazwischen liegenden Bereichen gewährleistet.

Eine derartige Kalibrierung kann am Bandende der Dozer-Produktion eingesetzt werden, wobei dann vorzugsweise der Dozer angehoben ist und sich die Ketten in der Luft befinden, so dass die Reibkoeffizienten des Unterbodens unberücksichtigt bleiben. Die beschriebene Autokalibrierung kann jedoch auch auf Beton oder im Gelände ausgeführt werden. Sie kann auch vom Servicepersonal durch bestimmte Pedal- und Joystickbetätigung während des Einschaltens der Zündung gestartet werden, um den Dozer nach Austausch eines Steuergerätes oder einer Pumpe im Feld zu kalibrieren.

Selbstverständlich ist es nicht erforderlich, alle Hydromaschinen 6, 8, 14, 16 in der vorbeschriebenen Weise für die minimalen und maximalen Ströme/Förder-/Schluckvolumina in den beschriebenen Fahrzuständen zu kalibrieren. Bei geringeren Anforderungen dürfte es ausreichen, die beiden Hydropumpen 6, 8 im Anfahrbereich und im Bereich der Maximalgeschwindigkeit zu kalibrieren.

Offenbart sind ein Kalibrierverfahren für einen Fahrantrieb eines Fahrzeugs mit zwei hydraulischen Antriebskreisen und ein Fahrantrieb, der nach einem derartigen Kalibrierverfahren betreibbar ist. Erfindungsgemäß erfolgt die Kalibrierung durch Erhöhen eines Steuersignals in einer Grobstufe bis ein Sollzustand, beispielsweise eine Minimaldrehzahl erreicht ist. Im Anschluss wird das Steuersignal um einen Anteil einer Grobstufe reduziert und in Feinstufen verändert bis der Sollzustand in einem Zielfenster liegt. Das Steuersignal wird über die Feinstufen so eingestellt, dass der Sollzustand im Zielfenster über eine vorbestimmten Zeitraum stabilisiert ist. Nach dieser Stabilisierung erfolgt eine Speicherung des eingestellten Signalpegels.

## Patentansprüche

1. Kalibrierverfahren für einen Fahrantrieb eines Fahrzeugs mit zwei hydraulischen Antriebskreisen, die jeweils einen Hydromotor (14, 16) mit verstellbaren Schluckvolumen und/oder eine Hydropumpe (6, 8) mit verstellbaren Fördervolumen aufweisen, denen jeweils ein Ansteuergerät zur Verstellung zugeordnet ist, das über ein Steuergerät (22) hydraulisch oder elektrisch angesteuert wird, mit den Schritten:
- Generieren eines Signalpegels unterhalb einer Ansprechschwelle eines Ansteuergerätes einer Hydromaschine (6,8; 14,16) eines Antriebskreises;
- Erhöhen des Signalpegels in Grobstufen bis ein Sollzustand erreicht ist;
- Reduzieren des Signalpegels bei Erreichen des Sollzustands um einen Teil einer Grobstufe, vorzugsweise um mehr als die Hälfte einer Grobstufe;
- Verändern des Signalpegels in Feinstufen bis der Sollzustand innerhalb eines Zielfensters liegt;
- Einstellen des Signalpegels über Feinstufen so, dass der Sollzustand über einen vorbestimmten Zeitraum im Zielfenster gehalten wird;
- Speichern des so ermittelten Signalpegels und
- Wiederholen der oben genannten Schritte in entsprechender Weise für den anderen Antriebskreis.

2. Kalibrierverfahren nach Patentanspruch 1, wobei das Steuersignal ein elektrischer Strom ist.

3. Kalibrierverfahren nach Patentanspruch 1 oder 2, wobei der Sollzustand eine Minimal- oder Maximaldrehzahl des Hydromotors (14, 16) oder der Hydropumpe (6, 8) ist.

4. Kalibrierverfahren nach Patentanspruch 3, wobei die Signalpegel diejenigen Steuersignale sind, die sich bei minimaler oder maximaler Drehzahl einstellen.

5. Kalibrierverfahren nach einem der vorhergehenden Patentansprüche, wobei die Ansteuergeräte jeweils einen Proportionalmagneten haben, der mit dem jeweiligen Steuersignal bestromt wird.

6. Kalibrierverfahren nach einem der vorhergehenden Patentansprüche, wobei die Kalibrierung sowohl für Rückwärts- als auch für Vorwärtsfahrt durchgeführt wird.

7. Kalibrierverfahren nach einem der vorhergehenden Patentansprüche, wobei dieses vor Auslieferung des Fahrzeugs an einen Kunden werksseitig, vorzugsweise im vom Boden abgehobenen Zustand durchgeführt wird.

8. Kalibrierverfahren nach einem der vorhergehenden Patentansprüche, wobei dieses bei einer Wartung oder nach Ablauf eines vorgegebenen Kalibrierzeitraums durchgeführt wird.

9. Hydraulischer Fahrantrieb eines Fahrzeuges, mit zwei hydraulischen Antriebskreisen, die jeweils einen Hydromotor (14, 16) mit verstellbaren Schluckvolumen und/oder eine Hydropumpe (6, 8) mit verstellbaren Fördervolumen aufweisen, denen jeweils ein Ansteuergerät zur Verstellung zugeordnet ist, das über ein Steuergerät (22) hydraulisch oder elektrisch ansteuerbar ist, wobei das Steuergerät (22) zur Durchführung des Verfahrens gemäß einem der vorhergehenden Ansprüche konfiguriert ist.

10. Fahrantrieb nach Patentanspruch 9, wobei das Fahrzeug ein Kettenfahrzeug, beispielsweise ein Dozer oder ein Crawler ist.

## Claims

1. Calibration method for a traction drive of a vehicle having two hydraulic drive circuits which each have a hydraulic motor (14, 16) with adjustable displacement volume and/or a hydraulic pump (6, 8) with adjustable delivery volumes, each of which is assigned an actuation device for making adjustments, which actuation device is hydraulically or electrically actuated by means of a control device (22), comprising the steps:
- generating a signal level below a response threshold of an actuation device of a hydraulic machine (6, 8; 14, 16) of a drive circuit;
- increasing the signal level in approximate increments until a setpoint increment is reached;
- reducing the signal level when the setpoint increment is reached, by a part of an approximate increment, preferably by more than half of an approximate increment;
- changing the signal level in fine increments until the setpoint state is within a target window;
- setting the signal level by means of fine increments in such a way that the setpoint state is held in the target window over a predetermined time period;
- storing the signal level which is determined in this way, and
- repeating the above-mentioned steps in a corresponding fashion for the other drive circuit.

2. Calibration method according to Patent Claim 1, wherein the control signal is an electric current.

3. Calibration method according to Patent Claim 1 or 2, wherein the setpoint increment is a minimum or maximum rotational speed of the hydraulic motor (14, 16) or of the hydraulic pump (6, 8).

4. Calibration method according to Patent Claim 3, wherein the signal levels are those control signals which are set at a minimum or maximum rotational speed.

5. Calibration method according to one of the preceding patent claims, wherein the actuation devices each have a proportional magnet which is energised with the respective control signal.

6. Calibration method according to one of the preceding patent claims, wherein the calibration is carried out both for reverse travel and for forward travel.

7. Calibration method according to one of the preceding patent claims, wherein said calibration method is carried out before the delivery of the vehicle to a customer at the works side, preferably in the state in which it is lifted off from the ground.

8. Calibration method according to one of the preceding patent claims, wherein said calibration method is carried out in the case of servicing or after the expiry of a predefined calibration time period.

9. Hydraulic traction drive of a vehicle, having two hydraulic drive circuits which each have a hydraulic motor (14, 16) with an adjustable displacement volume and/or a hydraulic pump (6, 8) with an adjustable delivery volume, each of which is assigned an actuation device for making adjustments, which actuation device can be actuated hydraulically or electrically by means of a control device (22) wherein the control device (22) is configured to carry out the method according to one of the preceding claims.

10. Traction drive according to Patent Claim 9, wherein the vehicle is a tracked vehicle, for example a bulldozer or a crawler.

## Revendications

1. Procédé d'étalonnage pour un entraînement de conduite d'un véhicule comprenant deux circuits d'entraînement hydrauliques qui présentent chacun un moteur hydraulique (14, 16) de cylindrée variable et/ou une pompe hydraulique (6, 8) de débit volumique variable, auxquels est à chaque fois associé un appareil de commande pour le réglage, lequel est commandé par le biais d'un appareil de commande (22) de manière hydraulique ou électrique, comprenant les étapes suivantes :
- génération d'un niveau de signal en dessous d'un seuil de réaction d'un appareil de commande d'une machine hydraulique (6, 8 ; 14, 16) d'un circuit d'entraînement ;
- augmentation du niveau de signal par étages grossiers jusqu'à atteindre un état de consigne ;
- réduction du niveau de signal à l'obtention de l'état de consigne d'une partie d'un étage grossier, de préférence de plus de la moitié d'un étage grossier ;
- modification du niveau de signal par étages fins jusqu'à ce que l'état de consigne soit à l'intérieur d'une fenêtre cible ; réglage du niveau de signal par étages fins, de telle sorte que l'état de consigne soit maintenu dans la fenêtre cible sur une période de temps prédéterminée ;
- mémorisation du niveau de signal ainsi déterminé et
- répétition des étapes susmentionnées de manière correspondante pour l'autre circuit d'entraînement.

2. Procédé d'étalonnage selon la revendication 1, dans lequel le signal de commande est un courant électrique.

3. Procédé d'étalonnage selon la revendication 1 ou 2, dans lequel l'état de consigne est une vitesse de rotation minimale ou maximale du moteur hydraulique (14, 16) ou de la pompe hydraulique (6, 8).

4. Procédé d'étalonnage selon la revendication 3, dans lequel les niveaux de signaux sont les niveaux de signaux de commande qui s'établissent lors d'une vitesse de rotation minimale ou maximale.

5. Procédé d'étalonnage selon l'une quelconque des revendications précédentes, dans lequel les appareils de commande présentent chacun un aimant à action proportionnelle qui est parcouru par le courant du signal de commande respectif.

6. Procédé d'étalonnage selon l'une quelconque des revendications précédentes, dans lequel l'étalonnage est effectué à la fois pour une conduite en marche arrière et pour une conduite en marche avant.

7. Procédé d'étalonnage selon l'une quelconque des revendications précédentes, dans lequel celui-ci est mis en oeuvre en atelier avant la fourniture du véhicule à un client, de préférence à l'état soulevé au-dessus du sol.

8. Procédé d'étalonnage selon l'une quelconque des revendications précédentes, dans lequel celui-ci est mis en oeuvre lors d'un service ou après l'écoulement d'une période de temps d'étalonnage prédéfinie.

9. Entraînement de conduite hydraulique d'un véhicule, comprenant deux circuits d'entraînement hydrauliques qui présentent chacun un moteur hydraulique (14, 16) de cylindrée variable et/ou une pompe hydraulique (6, 8) de débit volumique variable, auxquels est à chaque fois associé un appareil de commande pour le réglage, lequel peut être commandé hydrauliquement ou électriquement par le biais d'un appareil de commande (22), l'appareil de commande (22) étant configuré pour mettre en oeuvre le procédé selon l'une quelconque des revendications précédentes.

10. Entraînement de conduite selon la revendication 9, dans lequel le véhicule est un véhicule à chaîne, par exemple un bouteur ou une excavatrice à chenilles.
